Europäisches Patentamt

European Patent Office

Office européen des brevets

(11) Veröffentlichungsnummer: **0 266 750**
**A2**

(12) **EUROPÄISCHE PATENTANMELDUNG**

(21) Anmeldenummer: 87116192.3

(22) Anmeldetag: 04.11.87

(51) Int. Cl.⁴: **B60B 19/06** , B60B 7/00 , B60B 19/10

(30) Priorität: 07.11.86 DE 3637954

(43) Veröffentlichungstag der Anmeldung:
11.05.88 Patentblatt 88/19

(84) Benannte Vertragsstaaten:
DE FR GB IT SE

(71) Anmelder: **Walter Treser GmbH**
**Kälberschüttstrasse 8**
**D-8070 Ingolstadt(DE)**

(72) Erfinder: **Treser, Walter**
**Auenstrasse 23**
**D-8070 Ingolstadt(DE)**
Erfinder: **Agne, Horst**
**Pfarrer-Weingand-Strasse 43**
**D-8061 Haag an der Amper(DE)**

(74) Vertreter: **Neubauer, Hans-Jürgen, Dipl.-Phys.**
**Fauststrasse 30**
**D-8070 Ingolstadt(DE)**

(54) **Felge.**

(57) Die Erfindung betrifft eine Felge mit einer felgenseitigen Luftkammer. Die Luftkammer ist erfindungsgemäß als Ringkammer (15) mit großem Volumen zwischen einem Felgenkörper (2) und einem aufgesetzten Felgendeckel (3) gebildet. Die Luftkammer (15) steht über Bohrungen (19) mit dem Reifenhohlraum in Verbindung. Der Felgendeckel (3) ist mit Hilfe von Verschraubungen (18, 11) mit dem Felgenkörper (2) über O-Ringe (16, 17) dichtend verschraubt. Dadurch wird ein den Komfort verbesserndes felgenseitiges Zusatzvolumen in der Ringkammer (15) geschaffen. In einer weiteren Ausgestaltung wird das Ventil (22) nahe an der Nabe an der Ringkammer (15) angebracht, wodurch darauf geringere Fliehkräfte wirken. In einer Weiterführung der Erfindung sind Kühlluftkanäle radial außerhalb der Ringkammer (15) durch den Felgenkörper (2) geführt.

FIG.1

## Felge

Die Erfindung betrifft eine Felge nach dem Oberbegriff des Anspruchs 1.

Die Reifenentwicklung für Fahrzeugreifen führte zu immer geringeren Reifenquerschnittshöhen aufgrund der bekannten Vorteile, wie zum Beispiel der besseren Seitenführung in Kurven. Eine Verringerung der Querschnittshöhe führt jedoch bei gleichbleibender Reifenbreite zu einer Verringerung des im Reifen eingeschlossenen Luftvolumens und damit zu einer Verschlechterung der Federung und des Fahrkomforts. Möglichen Abhilfen durch ein vertieftes Felgenbett oder durch Verbreiterung der Reifen sind durch den am Fahrzeug zur Verfügung stehenden Platz und durch andere Randbedingungen Grenzen gesetzt, so daß auch einer wünschenswerten weiteren Reduzierung der Querschnittshöhe bei herkömmlichen Felgen-und Radausbildungen Grenzen gesetzt sind.

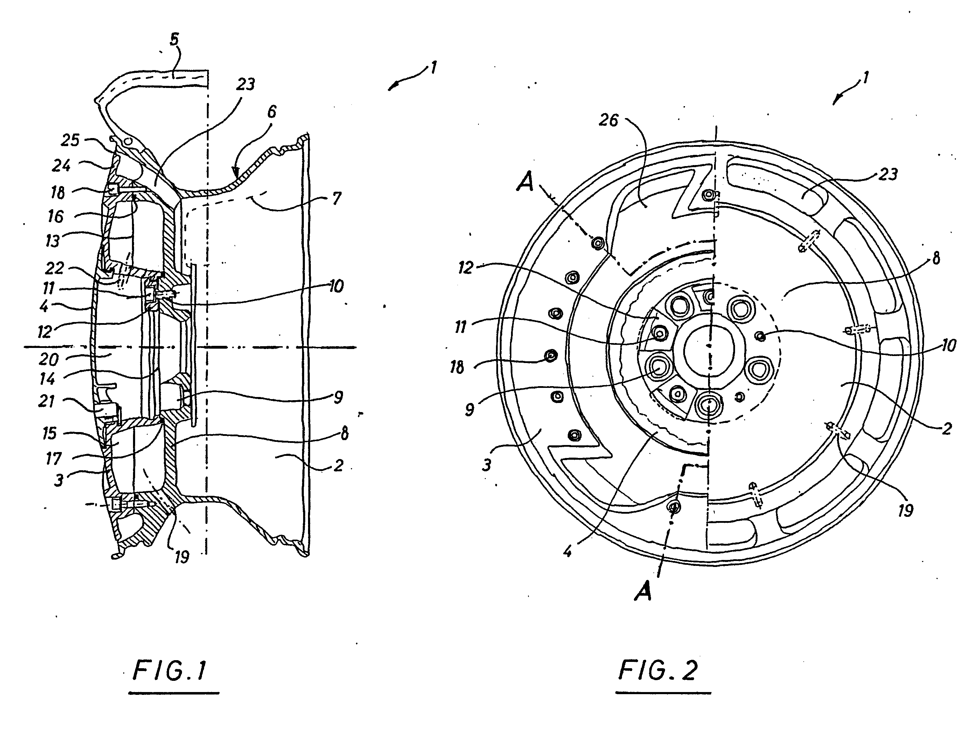

Es ist eine Anordnung eines Druckmeßelements für ein Luftdruckkontrollsystem an einem Fahrzeugrad bekannt (DE-OS 35 18 495), wobei das Meßelement vom Luftdruck im Reifenhohlraum beaufschlagt wird und mit einem achsfesten Geber zusammenarbeitet. Zum Schutz vor äußeren mechanischen Beschädigungen ist das Druckmeßelement in einer felgenseitig vorgesehenen Luftkammer angeordnet, die mit dem Reifenhohlraum über eine Luftdurchtrittsöffnung in Verbindung steht. Die hier vorgeschlagene Luftkammer kann je nach Ausführungsform in einer hohlen Speiche gebildet sein oder durch eine mit der Felge durch Kleben, Schweißen, Löten verbundenen Wand hergestellt sein. An dieser Wand ist dann das Druckmeßelement angebracht. Die offenbarte felgenseitige Luftkammer dient somit lediglich dazu, ein relative kleines Druckmeßelement aufzunehmen und die Verbindung zum Reifenhohlraum herzustellen. Aufgrund dieser Funktion ist das in der Luftkammer eingeschlossene Luftvolumen klein. Die Herstellung der Luftkammer durch eine zusätzliche Wand (Fig. 2 und 3) schafft Probleme an den Verbindungsstellen mit dem Felgenkörper. Klebe-oder Schweißstellen beinhalten die Gefahr von allmählich auftretenden Rissen und damit von Dichtheitsproblemen. Die Herstellung dürfte wegen der erforderlichen Sorgfalt bei der Herstellung der Luftkammer aufwendig und teuer sein. In jedem Fall ist ein kostengünstiges Gußverfahren für die gesamte Felge nicht möglich, da die Luftkammer sonst nicht entkernt werden kann.

Die in den Fig. 2 und 3 gezeigten Luftkammern dürften als schmale, länglich zur Nabe hin weisende Kammern ähnlich der weiter beschriebenen Luftkammern in den Speichen ausgebildet sein, da dadurch ihre Funktion der Druckweiterleitung an das Druckmeßelement voll erfüllt ist. Eine Erstreckung der Kammer über einen weiten Winkelbereich oder gar zu einer Ringkammer ist weder der Beschreibung noch der Zeichnung zu entnehmen und für die vorgesehenen Zwecke nicht erforderlich.

Eine Kühlluftabfuhr zur Kühlung der Bremsen, wie dies bei größeren und schnelleren Fahrzeugen erforderlich ist, ist in den Ausführungen nach den Fig. 2 und 3 nicht gezeigt, insbesondere erfolgt kein Hinweis, wo die Kühlluftabfuhr angebracht werden könnte, da die Luftkammer bis unmittelbar unter das Felgenbett geführt ist.

Ein bekanntes Problem ist die Anbringung des Ventils an der Felge. Da das Ventil die Verbindung von außen zum Reifenhohlraum schafft, wird dieses in der Regel im Bereich des Felgenhorns radial weit außenliegend angebracht. Bei schnellen Fahrten wirkt daher auf das Ventil eine große Fliehkraft, so daß es teilweise durch Abstütz-und Anlageelemente gehalten werden muß. Weiter führt das Ventil zu Unwuchten und is gegen äußere mechanische Einflüsse sowie gegen unbefugtes Manipulieren nur sehr wenig geschützt.

Aufgabe der Erfindung ist es demgegenüber, eine Felge zu schaffen, bei der trotz geringer möglicher Reifenquerschnittshöhe ein großes Luftvolumen für die Federung zur Verfügung steht, wobei die Felge praktikabel und preisgünstig herstellbar ist und zu keinen Dichtungsproblemen führt.

Diese Aufgabe wird bei einer gattungsgemäßen Felge mit den kennzeichnenden Merkmalen des Anspruchs 1 gelöst.

Gemäß Anspruch 1 ist eine Luftkammer als Ringkammer mit großem Volumen vorgesehen, die zwischen einem Felgenkörper und einem ringförmigen, aufgeschraubten Felgendeckel gebildet ist. Der Felgenkörper ist dabei so ausgelegt, daß er in üblicher Weise die angreifende Last tragen kann. Der Deckel dagegen ist weniger stark dimensioniert und trägt nur hilfsweise zur Abstützung der Last bei.

Der Felgendeckel und/oder der Felgenkörper haben eine ringförmige, gegeneinander weisende Auswöhlbung, wodurch beim Aneinanderlegen die Ringkammer gebildet wird. Die Ringkammer ist dabei so angeordnet, daß sie radial außerhalb des Lochkreises für die Befestigungsbohrungen der Felge liegt. Diese Befestigungsbohrungen sind somit ohne die Ringkammer oder den Felgendeckel zu berühren ausschließlich im Felgenkörper angebracht. Die beiden ringförmigen Anlageflächen zwischen dem Felgenkörper und dem Felgendeckel sind als abgedichtete Dichtflächen ausgebildet. Die Abdichtung wird mit Hilfe von Dichtbändern, Dichtpasten oder bevorzugt mit O-Ringen durchgeführt. Der Felgendeckel ist mit dem Felgenkörper durch am Umfang versetzte, in der Nähe der Dichtfläche angreifende Verschraubungen verschraubt.

Die Ringkammer ist mit dem Reifenhohlraum durch eine Mehrzahl, bevorzugt neun, am Umfang versetzten Luftdurchtrittsöffnungen verbunden, die beim Einfedern des Reifens einen sofortigen Luftaustausch mit der Ringkammer ermöglichen.

Durch die erfindungsgemäße große, felgenseitige Ringkammer steht für die Federung ein zum Reifenvolumen zusätzliches Luftvolumen zur Verfügung. Dadurch wird der Komfort verbessert mit der Möglichkeit einer weiteren Reduzierung der Reifenquerschnittshöhe bei sonst gleichbleibenden Randbedingungen, insbesondere bei gleichbleibender Reifenbreite. Dies führt insgesamt aufgrund der Möglichkeit einer weiter reduzierten Reifenquerschnittshöhe bei gleichbleibendem Komfort zu einem besseren fahrverhalten eines Fahrzeugs. Zudem wirkt eine so ausgebildete Felge mit sehr niederer Reifenquerschnittshöhe optisch gut und kommt einem Markttrend entgegen.

Durch die zweiteilige Ausführung der Felge mit einem Felgenkörper und einem Felgendeckel kann die Ringkammer aus einfach herstellbaren Gußteilen geschaffen werden ohne Probleme bei der Entformung. Dichtheitsprobleme durch Risse an Schweißnahten oder Klebenahten treten bei der erfindungsgemäßen Verschraubung und Abdichtung über O-Ringe nicht auf. Dadurch kann kein unerwünschter Druckverlust durch die Ringkammer auftreten, so daß deren sichere und dauerhafte Abdichtung insgesamt zu einer Erhöhung der Sicherheit des Fahrzeugs führt.

Gemäß Anspruch 2 ist es aufgrund der vorgegebenen Geometrie und des vorgegebenen Platzes vorteilhaft, den Felgendeckel von der Felgenaußenseite her auf Felgenkörper aufzuschrauben. Durch die am Umfang versetzten und ggf. sichtbar bleibenden Verschraubungen wird ein guter optischer Effekt erzielt.

Die Verschraubung des Felgendeckels im Bereich der Nabe wird nach Anspruch 3 zweckmäßig mit Hilfe von Spannmitteln, wie Spannpratzen oder einen Spannring, durchgeführt, die an einem umlaufenden Felgendeckelrand bzw. Vorsprung angreifen und diesen gegen den Felgenkörper pressen. Aufgrund dieser Ausführung ist es möglich, nur eine einzige Deckelausführung für Vierloch-und Fünflochfelgen zu verwenden. Es wird im übrigen auch nur eine Deckelausführung benötigt, unabhängig von der Felgenbreite, die lediglich durch den Felgenkörper bestimmt ist. Es ergibt sich somit eine Art von Bausystem mit nur wenig herzustellenden Einzelteilausführungen, die zu der gewünschten Felge ergänzt werden. Ein weiterer Aspekt in dieser Richtung wird im Zusammenhang mit Anspruch 9 erläutert.

Der mittlere freie Bereich des ringförmigen Felgendeckels wird zweckmäßig von einer mit einem Schloß verschließbaren Radkappe abgedeckt. Dadurch sind die Befestigungsverschraubungen für die Felge vor Umwelteinflüssen und Manipulation geschützt und zugleich wird eine Diebstahlsicherung für die Felge erreicht. (Anspruch 4) Bei einer Anbringung des Ventils innerhalb des druch die Radkappe abgedeckten Bereiches wird auch dieses geschützt. Eine solche Ventilanbringung ist in Anspruch 5 vorgeschlagen, wobei damit als besonderer Vorteil weiter erreicht wird, daß das Ventil nahe an der Nabe liegt und somit wesentlich geringere Fliehkräfte und Unwuchten auftreten.

Zu einer Verbesserung der Aerodynamik wird mit Anspruch 6 vorgeschlagen, daß die äußere Felgendeckelfläche und die Radkappe glatt ineinander ébergehen und eine geschlossene und flache Felgenaußenseite bilden.

Zur Abführung der Kühlluft werden mit Anspruch 7 Kühlluftkanäle beansprucht, die etwa im Bereich unterhalb des Felgenhorns zur Außenseite hin enden und gegenüber denen die Ringkammer etwas weiter nebenseitig liegt, so daß sie von den Kühlluftkanälen unberührt bleibt. Bei einer solchen Ausbildung ist somit trotz des zusätzlichen großen, felgenseitigen Luftzusatzvolumens eine wirksame Kühlluftabfuhr möglich.

Nach Anspruch 8 werden die Austrittsöffnungen der Kühlluftkanäle von einem angeformten, außen umlaufenden Rand des Felgendeckels bis auf einen schmalen Schlitz zwischen Felgenhorn und Deckelrand abgedeckt. Dadurch wird die Aerodynamik wegen der glatten und flachen Felgenaußenseite günstig beeinflußt und eine glattere Felgenform ergibt auch einen optisch guten Eindruck.

Für eine Verbesserung der Kühlluftabfuhr ist zusätzlich zu dem oben genannten Schlitz mit Anspruch 9 vorgeschlagen, im Felgendeckel an wenigstens drei am Umfang versetzten Stellen große Auslaßschlitze vorzusehen. Die Zahl der großen Auslaßschlitze ist geringer als die Anzahl der Austrittsöffnungen der Kühlluftkanäle. Diese Auslaßschlitze sind in ihrer Form entgegen der Laufrichtung zweckmäßig schaufelartig geneigt. Dadurch ist eine Unterscheidung zwischen links-und rechtslaufenden Felgen erforderlich. Aufgrund der zweiteiligen Ausführung durch einen außen aufgesetzten Felgendeckel und einen Felgenkörper können für beide Ausführungen die gleichen Felgenkörper verwendet werden. Es ist lediglich ein für Links-oder Rechtslauf geformter Deckel zu verwenden. Dadurch wird die Teilevielfalt bei der Lagerung und Herstellung erheblich verringert und die Herstellung insgesamt preiswert.

Der Deckel wird zweckmäßig so ausgeführt, daß er die üblichen Felgenquerschnitte berücksichtigt, so daß gemäß Anspruch 10 die radial äußere dichtfläche in der Nähe des Felgenhorns axial weiter zur Radaußenseite gegenüber der radial inneren Dichtfläche liegt.

Für eine weitere Vergrößerung des für die Federung zur Verfügung stehenden Luftvolumens soll nach Anspruch 11 die Felge mit einem - soweit es der zur Verfügung stehende Platz erlaubt - möglichst tiefen Felgenbett ausgeführt sein.

Mit der Merkmalen des Anspruchs 12 wird eine zweckmäßige Wahl der Herstellungsmaterialien angegeben.

Anhand eines Ausführungsbeispiels wird die Erfindung mit weiteren einzelheiten, Merkmalen und Vorteilen näher erläutert.

Es zeigen

Fig. 1 einen Axialschnitt durch eine Felge nach der Linie A-A aus Fig. 2,

Fig. 2 eine Draufsicht auf die Felgenaußenseite, wobei im linken Teil der Fig. ein Felgendeckel aufgesetzt ist, der in der rechten Hälfte der Fig. abgenommen ist.

In Fig. 1 ist eine Felge 1 gezeigt, die aus einem gegossenen Felgenkörper 2, einem von der Felgenaußenseite her aufgesetzten Felgendeckel 3 und einer Radkappe 4 besteht. Ein Reifen 5 mit geringer Querschnittshöhe ist im oberen Bereich der Fig. 1 angedeutet.

Der Felgenkörper 2 enthält ein tief nach unten geführtes Felgenbett 6, wodurch der zur Verfügung stehende Platz über der Bremseinrichtung (angedeutet durch strichlierte Linie 7) für einen großen Reifenhohlraum ausgenutzt ist. Am senkrechten Teil 8 des Felgenkörpers 2 sind auf einem Lochkreis die Bohrungen 9 zur Befestigung der Felge zu erkennen. Wie aus Fig. 2 zu ersehen ist, hadelt es sich in der dargestellten Ausführungsform um eine Fünflochfelge.

Zwischen den Bohrungen 9 sind weitere Gewindebohrungen 10 angebracht, in die Schrauben 11 eingesetzt sind, die zur Befestigung von Spannpratzen 12 dienen.

Der ringförmige Felgendeckel 3 liegt an Dichtflächen 13, 14 am Felgenkörper 2 an, wodurch eine Ringkammer 15 gebildet wird. An den Dichtflächen 13, 14 liegen in umlaufenden Nuten O-Ringe 16, 17.

Im Bereich der äußeren Dichtfläche 13 ist der Felgendeckel mit Hilfe von Schrauben 18 mit dem Felgenkörper 2 verschraubt. Im Bereich der weiter innen liegenden Dichtfläche 14 wird der Felgendeckel mit Hilfe der Spannpratzen 12 gehalten.

Von der Ringkammer 15 führen eine Reihe von Luftdurchtrittsöffnungen durch den Felgenkörper 2 zum Felgenbett 6.

Ein freier Raum 20, der von der Ringkammer 15 umgeben ist, wird von der Radkappe 4 abgedeckt. Die Radkappe 4 enthält ein Schloß 21, mit dem sie am Felgendeckel 3 absperrbar befestigt werden kann.

In der zur Nabe hinweisenden Wand des Felgendeckels, die eine seitliche Begrenzung des freien Raums 20 bildet, ist ein Ventil 22 (strichliert angedeutet) eingesetzt.

Von der Felgeninnenseite her führen neun Kühlluftkanäle 23 zur Felgenaußenseite, wobei diese radial außerhalb der Ringkammer 15 liegen und ihre Austrittsöffnungen unterhalb des Felgenhorns enden. Diese Öffnungen sind durch einen umlaufenden Rand 24 des Felgendeckels 3 weitgehend abgedeckt, wobei nur ein schmaler, umlaufender Luftaustrittschlitz 25 (siehe Fig. 1) verbleibt.

Der Felgendeckel 3 enthält jedoch drei am Umfant gleichmäßig versetzte große Auslaßschlitze 26, die in ihrer Kontur gegenüber dem Radis entgegen der Laufrichtung angestellt sind bzw. auslaufen (siehe Fig. 2, linke Seite).

Die dargestelle Ausführungsform hat folgende Funktion:

Beim Einfedern des Reifens 5 wird als federndes Luftvolumen über die Luftdurchtrittsöffnungen 19 auch das in der Ringkammer 15 befindliche Luftvolumen mit herangezogen. Dadurch wird auch bei einem Reifen mit geringer Querschnittshöhe noch ein ausreichender Fahrkomfort erzielt. Beim Bremsen wird die erforderliche Kühlluft durch die Kühlluftkanäle 23 zur Felgenaußenseite hin abgeführt, wobei die Kühlluft sowohl durch den Luftaustrittschlitz 25 als auch durch die großen Auslaßschlitze 26 austritt. die Befestigungsbohrungen 9 bzw. die darin sitzenden Schrauben, die Schrauben 11 und das Ventil 22 sind durch die abschließbare Radkappe 4 gegen Umwelteinflüsse und Manipulationen geschützt. Auf das Ventil 22 wirkt nur eine relativ geringe Fliehkraft.

Eine erfindungsgemäße Felge wird nach folgenden Kriterien aus relativ wenigen genormten Teilen zusammengestellt: Als erstes wird der Felgentyp gemäß dem Fahrzeugtyp bestimmt (Anzahl der Befestigungsbohrungen, Einprägung, etc.) und die gewünschte Felgenbreite festgelegt. Entsprechend werden vier gleiche Felgenkörper 2 bereitgestellt. Anschließend werden jeweils zwei Felgendeckel für die unterschiedlichen Laufrichtungen bereitgestellt und mit den Felgenkörpern unter Zwischenlage von O-Ringen verschraubt. Damit sind vier Felgen für ein Fahrzeug montagebereit. Es ist zu ersehen, daß für unterschiedliche Felgen nur jeweils zweierlei Felgendeckel und die gleiche Radkappe verwendet werden kann.

Zusammenfassend wird festgestellt, daß mit der Erfindung eine Felge zur Verfügung gestllt wird, die bei kleiner Reifenquerschnittshöhe einen befriedigenden Fahrkomfort erhält, die zudem einfach und preisgünstig herstellbar und montierbar ist und bei der keine Dichtheitsprobleme auftreten. Zudem ist eine vorteilhafte Anbringungen des Ventils und eine gut bemessene Bremsenkühlung möglich.

**Ansprüche**

1. Felge
mit einer felgenseitigen Luftkammer und einer Verbindung zum Reifenhohlraum bzw. dem Felgenbett, dadurch gekennzeichnet,
daß die Luftkammer eine Ringkammer (15) mit großen Volumen ist, die zwischen einem Felgenkörper (2) und einem ringförmigen Felgendeckel (3) gebildet ist, wobei der Felgenkörper so ausgelegt ist, daß er wenigstens den Großteil der angreifenden Last trägt,
daß der Felgendeckel (3) und/oder der Felgenkörper (2) eine ringförmige Auswölbung enthält, wodurch beim Aneinanderlegen die Ringkammer (15) so gebildet ist, daß sie radial außerhalb des Lochkreises der im Felgenkörper (2) angebrachten Bohrungen (9) für die Befestigung der Felge (1) liegt,
daß die beiden ringförmigen Anlageflächen zwischen Felgenkörper (2) und Felgendeckel (3) an der Ringkammer (15) als Dichtflächen (13, 14) ausgebildet sind und die Abdichtung über zwei an den Dichtflächen (13, 14) umlaufende Dichtmittel, insbesondere O-Ringe (16, 17) durchgeführt ist,
daß der Felgendeckel (3) mit dem Felgenkörper (2) durch am Umfang versetzte Verschraubungen (18, 11) verschraubt ist und
daß die Verbindung zwischen der Ringkammer (15) und dem Reifenhohlraum bzw. dem Felgenbett (6) durch eine Mehrzahl von am Umfant versetzten Luftdurchtrittsöffnungen (19) hergestellt ist.

2. Felge nach Anspruch 1, dadurch gekennzeichnet, daß der Felgendeckel (3) von der Felgenaußenseite her auf den Felgenkörper (2) aufgeschraubt ist.

3. Felge nach Anspruch 1 oder 2, dadurch gekennzeichnet, daß der zur Nabe weisende Felgendeckelrand einen umlaufenden Vorsprung trägt, an dem Spannmittel, wie Spannpratzen (12) oder ein Spannring, für die Verschraubung mit dem Felgenkörper (2) angreifen, wobei die Schrauben (11) für die Spannmittel zwischen den Bohrungen (9) für die Felgenbefestigung liegen.

4. Felge nach einem der Ansprüche 2 oder 3, dadurch gekennzeichnet, daß der mittlere freie Bereich (20) des Felgendeckels von einer absperrbaren Radkappe (4) abgedeckt ist.

5. Felge nach einem der Ansprüche 2 bis 4, dadurch gekennzeichnet, daß die Ringkammer (15) über die Ebene des Lochkreises zur Radaußenseite hin vorsteht und das Ventil (22) in einer nahe an der Nabe liegenden Wand des Felgendeckels (3) mit Verbindung zur Ringkammer (15) angebracht ist.

6. Felge nach einem der Ansprüche 2 bis 5, dadurch gekennzeichnet, daß die zur Radaußenseite weisende Felgendeckelfläche und die Radkappe (4) eine insgesamt glatt ineinander übergehende Fläche bilden.

7. Felge nach einem der Ansprüche 1 bis 6, dadurch gekennzeichnet, daß im Felgenkörper (2) von der Felgeninnenseite her Kühlluftkanäle (23) ausgebildet sind, die etwa im Bereich unterhalb des Felgenhorns enden, wobei gegenüber den Kühlluftkanälen (23) die Ringkammer (15) zur Nabe hin liegt und von den Kühlluftkanälen (23) unberührt bleibt.

8. Felge nach Anspruch 7, dadurch gekennzeichnet, daß die Austrittsöffnungen der Kühlluftkanäle (23) von einem umlaufenden äußeren Rand (24) des Felgendeckels (3) bis auf einen schmalen Schlitz (25) zwischen Felgenhorn und Deckelrand (24) abgedeckt sind.

9. Felge nach Anspruch 8, dadurch gekennzeichnet, daß der Felgendeckel (3) an wenigstens drei am Umfang versetzten Stellen große Auslaßschlitze (26) für die Kühlluft aufweist, die entgegen der Laufrichtung in ihrer Form auslaufen.

10. Felge nach einem der Ansprüche 2 bis 9, dadurch gekennzeichnet, daß die radial äußere Dichtfläche (13) axial weiter zur Radaußenseite liegt gegenüber der radial inneren Dichtfläche (14).

11. Felge nach einem der Ansprüche 1 bis 10, dadurch gekennzeichnet, daß das Felgenbett (6) tief ausgebildet ist und die Felge (1) für die Montage von Reifen (5) sehr geringer Höhe geeignet ist.

12. Felge nach einem der Ansprüche 1 bis 11, dadurch gekennzeichnet, daß der Felgenkörper (2) und der Felgendeckel (3) aus Magnesium oder anderen Leichtmetallen hergestellt ist oder daß der Felgendeckel (3) aus Kunststoff hergestellt sind.

FIG.1

FIG.2

0 266 750